# EUROPÄISCHE PATENTSCHRIFT

(11) **EP 2 998 133 B1**
(45) Veröffentlichungstag und Bekanntmachung des Hinweises auf die Patenterteilung: **07.08.2019**
(21) Anmeldenummer: 15182944.7
(22) Anmeldetag: 28.08.2015
(51) Int. Cl.: B60C 23/00

(54) **VERFAHREN UND SYSTEM ZUR REDUZIERUNG VON FAHRZEUGSCHWINGUNGEN**
METHOD AND SYSTEM FOR REDUCING VIBRATION OF VEHICLES
PROCEDE ET SYSTEME DE REDUCTION DES VIBRATIONS D'UN VEHICULE

(30) Priorität: 18.09.2014 DE 102014113466
(43) Veröffentlichungstag der Anmeldung: 23.03.2016
(73) Patentinhaber: CLAAS Tractor S.A.S., 78141 Vélizy-Villacoublay Cedex (FR)
(72) Erfinder: Fedde, Thomas, 33129 Delbrück (DE); Wieckhorst, Jan Carsten, 33098 Paderborn (DE)
(74) Vertreter: CLAAS Gruppe

(56) Entgegenhaltungen:
- EP-A1- 1 757 472
- EP-A1- 2 583 543
- JP-A- S 588 411
- US-A1- 2013 174 938

## Beschreibung

Die Erfindung betrifft ein Verfahren und ein System zur Reduzierung einer Fahrzeugschwingung eines landwirtschaftlichen Fahrzeuges gemäß dem Oberbegriff des Anspruchs 1.

Bei landwirtschaftlichen Fahrzeugen, insbesondere Traktoren mit luftbereiften Rädern, ist es seit längerer Zeit bekannt, dass es beispielsweise bei der Bodenbearbeitung mit einem von dem landwirtschaftlichen Fahrzeug gezogenen Arbeitsgerät zu einem Aufschwingen des Fahrzeuges, einem sogenannten "Power Hop", kommen kann. Bei diesen Fahrzeugschwingungen, dem Power Hop, handelt es sich um im Wesentlichen vertikale Fahrzeugschwingungen, die der Vorwärtsbewegung des landwirtschaftlichen Fahrzeuges überlagert sind. Diese Fahrzeugschwingungen treten besonders bei landwirtschaftlichen Fahrzeugen wie Traktoren mit Allradantrieb auf, welche Arbeitsgeräte mit mittlerem bis hohem Zugkraftbedarf auf einem trockenen Boden ziehen. Hierbei können die im Wesentlichen vertikalen Fahrzeugschwingungen fortschreitend ansteigen, wodurch es zu einer Reduzierung der Bodenhaftung des landwirtschaftlichen Fahrzeuges und damit zu einer Reduzierung der auf den Boden übertragbaren Kräfte kommt. Dadurch kann es zu einer starken Schwankung der Zugkraft in Abhängigkeit zu den vertikalen Fahrzeugschwingungen kommen.

Aus der EP 2 583 543 A1 ist ein landwirtschaftliches Fahrzeug mit einer elektropneumatische Reifendruckregelanlage bekannt, durch welche eine automatisierte Optimierung zwischen Zugkraft, Schlupf und Reifendruck ermöglicht wird. Dabei ist vorgesehen, den Reifendruck anhand von gemittelten Werten aus der Arbeitstiefenregelung oder Schlupfregelung den herrschenden Bedingungen optimal anzupassen indem der Reifendruck situationsbedingt erhöht oder verringert wird, während sich bei einer bestimmte Arbeitstiefe eines Anbaugeräts eine entsprechend der herrschenden Bedingungen zwischen Boden und Reifen bestimmte Zugkraft und/oder ein bestimmter Schlupf einstellt.

Die EP 1 757 472 A1 offenbart ein Verfahren zum Betrieb einer Einrichtung für eine Reifenfüllanlage für Kraftfahrzeuge, welche ein hochdynamisches anheben und absenken eines Reifendruckes ermöglichen soll, um den Komfort und die Sicherheit eines Kraftfahrzeuges, beispielsweise durch Ausgleich von Wankbewegungen bei schnellen Kurvenfahrten, zu erhöhen. Des Weiteren kann bei erkanntem Motorstuckern durch die Sensorik entsprechend einer Regellogik der Fülldruck der Reifen zumindest einer Achse um einen von der Regellogik vorgegebenen Betrag verändert, um eine Komfortbeeinträchtigung durch das Motorstuckern zu verringern.

Eine Reifenluftdruck-Steuereinrichtung zur Verbesserung der Lenkeigenschaften und des Fahrgefühls eines Fahrzeuges ist aus der JP S58 8411 A bekannt. Durch die Reifenluftdruck-Steuereinrichtung ist der Reifendruck eines Reifens unter anderem basierend auf einer auf den Reifen wirkenden Last, einem Vibrationsniveau und einer Fahrzeuggeschwindigkeit derart regelbar, dass eine benötigte Seitenführungskraft, beispielsweise bei schnellen Kurvenfahrten, bereitgestellt werden kann.

Ein Verfahren und eine Vorrichtung zur Dämpfung von Luftreifen an Fahrzeugen ist aus der US 2013/174938 A1 bekannt, welches auf innerhalb der Luftreifen angeordneten Sensoren zur Erfassung von Vibrationskräften beruht. Basierend auf Signalen der Sensoren kann mittels einer Pumpe ein Druck in den Luftreifen erhöht oder abgesenkt werden, wobei die Luft durch Kapillardurchgänge geleitet wird, welche durch Reibungsverluste eine Dämpfung der Vibrationskräfte in den Luftreifen ermöglichen.

Aus der DE 10 238 346 A1 sind ein Verfahren und ein Steuersystem zur Reduzierung von Lageschwingungen eines Fahrzeuges bekannt, bei den mittels eines am Fahrzeug montierten Beschleunigungsmessers eine senkrechte Fahrzeugbeschleunigung gemessen wird, aus der ein Beschleunigungssignal in Abhängigkeit von einer Fahrzeugbewegung generiert wird. Des Weiteren wird ein Ausgangssignal als Funktion des Beschleunigungssignals generiert und die Kraftstoffzufuhr zum Motor als Funktion des Ausgangssignals modifiziert. Nachteilig ist hierbei jedoch, dass durch eine Reduzierung der eingespritzten Kraftstoffmenge der Antriebsmotor in einem Teillastbereich mit entsprechend reduzierter Arbeitsleistung und reduziertem Motordrehmoment betrieben wird, wodurch die Zugkraft des Fahrzeuges verringert wird. Weiterhin ist es bekannt, die auftretenden vertikalen Fahrzeugschwingungen durch eine Reduzierung der Raddrehzahlen zu vermindern, hierbei ist jedoch nachteilig, dass damit eine Abnahme der Maschinenauslastung und Arbeitsleistung einhergeht und somit auch der Systemwirkungsgrad reduziert wird.

Es ist daher die Aufgabe der vorliegenden Erfindung, ein Verfahren und ein System zur Reduzierung von im Wesentlichen vertikalen Fahrzeugschwingungen eines landwirtschaftlichen Fahrzeuges bereitzustellen, welches eine Reduzierung der Arbeitsleistung des landwirtschaftlichen Fahrzeuges vermeidet.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein Verfahren zur Reduzierung von Fahrzeugschwingungen für ein landwirtschaftliches Fahrzeug mit einem Antriebsmotor und einem damit zusammenwirkenden Fahrgetriebe zum Antrieb von Rädern mit luftgefüllten Reifen, und einer Steuereinheit zur Regelung eines Reifendruckes mindestens eines Reifens. Erfindungsgemäß wird ein Sensorsignal in Abhängigkeit mindestens einer ermittelten Fahrzeugschwingung generiert, und der Reifendruck mindestens eines Reifens in Abhängigkeit des Sensorsignals, insbesondere automatisch, durch die Steuereinheit zur Reduzierung der ermittelten Fahrzeugschwingungen geregelt.

Die Regelung des Reifendruckes in Abhängigkeit des Sensorsignals bietet den Vorteil, dass die im Wesentlichen vertikalen Fahrzeugschwingungen durch eine Änderung der Reifensteifigkeiten reduziert werden können, wodurch ein Reduzieren des Antriebsmotordrehmomentes, beispielsweise durch eine reduzierte Kraftstoffeinspritzmenge, und eine damit einhergehende reduzierte Arbeitsleistung vermieden werden kann. Eine Automatisierung bietet dabei den Vorteil, dass der Reifendruck und damit die Reifensteifigkeit und -dämpfung kontinuierlich geregelt werden können, so dass sich die bei der Bearbeitung eines Feldes kontinuierlich verändernden Umgebungsbedingungen berücksichtigt werden können, und ein Aufschwingen des landwirtschaftlichen Fahrzeuges auch bei den sich ändernden Umweltbedingungen vermieden werden kann. Hierdurch kann sichergestellt werden, dass das landwirtschaftliche Fahrzeug auch bei kontinuierlich wechselnden Umweltbedingungen mit einer hohen Arbeitsleistung und Effizienz genutzt werden kann.

In einer bevorzugten Ausgestaltung der Erfindung wird für das Sensorsignal ein, insbesondere in einer Steuereinheit hinterlegbarer, Grenzwert vorgegeben, und bei einem Überschreiten des Grenzwertes wird der Reifendruck mindestens eines Reifens geregelt. Der Grenzwert kann ein fahrzeugspezifischer Grenzwert sein, welcher in der Steuereinheit des landwirtschaftlichen Fahrzeuges hinterlegt werden kann. Das Regeln des Reifendruckes kann dabei ein Anheben oder Absenken des Druckes mindestens eines Reifens sein, wobei Reifen einzeln, achsweise oder gemeinsam geregelt werden können. Der Reifendruck kann dabei derart geregelt werden, bis das Sensorsignal den vorgegebenen Grenzwert wieder unterschreitet. Durch die Vorgabe eines Grenzwertes können Fahrzeugschwingungen bis hin zu einem dem Grenzwert entsprechenden Grad toleriert werden, ohne dass die Steuereinheit den Reifendruck eines oder mehrerer Reifen regelt. Dies bietet den Vorteil, dass ein kontinuierliches Arbeiten der Steuereinheit und ein übermäßiger Verschleiß der zur Regelung des Reifendruckes benötigten Bauteile vermieden werden kann.

In einer besonders bevorzugten Ausgestaltung umfasst das Verfahren die Schritte Absenken des Reifendruckes mindestens eines Reifens auf einen Mindestreifendruck, wobei der Mindestreifendruck von einer Reifentragfähigkeitsgrenze des Reifens abhängig ist, sowie Anheben, insbesondere schrittweises Anheben, des Reifendruckes bei fortgesetztem Überschreiten des Grenzwertes durch das Sensorsignal bis zu einem Unterschreiten des Grenzwertes durch das Sensorsignal. An der Reifentragfähigkeitsgrenze weist der Reifen einen minimal zulässigen Reifendruck bei einer gegebenen Achslast auf. Anschließend ein Vergleich des Sensorwertes mit dem Grenzwert, um zu beurteilen, ob die Fahrzeugschwingungen beseitigt wurden. Ist dies nicht der Fall, Anheben, insbesondere schrittweises Anheben, des Reifendruckes bis zur Beseitigung der Schwingung, indiziert durch ein Unterschreiten des Grenzwertes durch das Sensorsignal. Durch das Variieren des Reifendruckes auf einen Mindestreifendruck bis an die Tragfähigkeitsgrenze des Reifens und das anschließende optionale schrittweise Anheben des Reifendruckes, werden die Steifigkeit und die Dämpfungseigenschaften des/der Reifen(s) variiert, um das schwingende System zu verstimmen und den Grenzwert des Sensorsignals wieder zu unterschreiten.

In einer weiterhin bevorzugten Ausgestaltung des Verfahrens wird die jeweilige Reifentragfähigkeitsgrenze und/oder ein entsprechender Mindestreifendruck in der Steuereinheit hinterlegt. Die Reifentragfähigkeitsgrenze und/oder ein entsprechender Mindestreifendruck können durch einen Bediener in Abhängigkeit des tatsächlichen Fahrzeuggewichtes in der Steuereinheit hinterlegt werden. In der Steuereinheit kann beispielsweise auch eine Reifentragfähigkeitstabelle in Form eines Kennfeldes hinterlegt werden, wobei mittels eines Sensors für die Radlast, Achslast und/oder das Fahrzeuggewicht durch die Steuereinheit automatisch die Reifentragfähigkeitsgrenze und/oder den entsprechenden Mindestreifendruck ermitteln werden können. Dies hat den Vorteil, dass die entsprechenden Werte der Radlast, Achslast und/oder des Fahrzeuggewichtes durch den Bediener nur zu Beginn der Nutzung des landwirtschaftlichen Fahrzeuges in die Steuereinheit eingegeben werden müssen, und zur automatischen Regelung des Reifendruckes die Steuereinheit auf diesen Wert zurückgreifen kann.

In einer bevorzugten Ausgestaltung des Verfahrens wird das Sensorsignal durch eine manuelle Eingabe des Bedieners generiert. Hierbei kann der Bediener des Fahrzeuges bei auftretenden Fahrzeugschwingungen eine Eingabe, beispielsweise an einem Bedienterminal, tätigen, wenn eine Regelung des Reifendruckes zur Reduzierung der Fahrzeugschwingungen durchgeführt werden soll. Hierbei bestimmt der Bediener, wann die auftretenden Fahrzeugschwingungen einen Grenzwert, insbesondere einen subjektiven Grenzwert, überschreiten, so dass nach Tätigung der Eingabe und Generierung des Sensorsignals eine entsprechende Regelung des Reifendruckes erfolgt. Bei einem schrittweisen Anheben des Reifendruckes nach einem Absenken auf einen Mindestreifendruck kann das Unterschreiten des Grenzwertes durch eine erneute Eingabe des Bedieners festgelegt werden, so dass die Steuereinheit die Variation des Reifendrucks beenden kann. Das Unterschreiten des Grenzwertes bedeutet, dass die störenden Schwingungen, insbesondere der sogenannte Power-Hop, nicht weiter auftreten. Die Unterschreitung des Grenzwertes kann der Steuereinheit durch eine manuelle Eingabe angezeigt werden.Die manuelle Generierung des Sensorsignals hat den Vorteil, dass das Verfahren zur Reduzierung der Fahrzeugschwingungen in ein bestehendes System, beispielsweise durch Integration in das Bedienterminal, zur Regelung des Reifendruckes mit einer Steuereinheit integriert werden kann.

In einer bevorzugten Ausgestaltung des Verfahrens wird das Sensorsignal als Funktion einer gemessenen vertikalen Beschleunigung des landwirtschaftlichen Fahrzeuges generiert. Der Grenzwert des Sensorsignals kann dabei ebenfalls ein vorgegebener Beschleunigungswert sein. Die Messung der vertikalen Beschleunigung des landwirtschaftlichen Fahrzeuges kann beispielsweise einen oder mehrere an dem landwirtschaftlichen Fahrzeug angeordneten Beschleunigungssensoren erfolgen. Es können auch bereits an dem Fahrzeug angeordnete Beschleunigungssensoren genutzt werden, beispielsweise fahrzeugfest an dem Fahrzeug angeordnete Beschleunigungssensoren zur Regelung einer Dämpfung der Fahrerkabine. Die Nutzung von Beschleunigungssensoren zur Generierung des Sensorsignales hat den Vorteil, dass die auftretenden im Wesentlichen vertikalen Fahrzeugschwingungen unmittelbar durch die Messung der auftretenden vertikalen Beschleunigung erfasst werden können.

Vorzugsweise wird das Sensorsignal als Funktion eines gemessenen Abtriebsdrehmomentes des Fahrgetriebes generiert. Die auftretenden, im Wesentlichen vertikalen Fahrzeugschwingungen bewirken durch die Schwankung der auf den Boden übertragbaren Kräfte ebenfalls eine Schwankung in dem Abtriebsdrehmoment des Fahrgetriebes. Das Fahrgetriebe kann dabei beispielsweise ein hydraulisch-mechanisch leistungsverzweigtes Getriebe sein, bei dem aus den Drücken seiner Hydrostaten das Abtriebsdrehmoment ermitteln werden kann. Ein entsprechender Grenzwert kann dabei in Form von entsprechenden Drücken oder Druckschwankungen der Hydrostaten vorgegeben werden. Die Messung des Abtriebsdrehmomentes des Fahrgetriebes bietet den Vorteil, dass bereits bestehende Sensorik bei einer Nachrüstung genutzt werden kann.

In einer weiteren bevorzugten Ausgestaltung des Verfahrens wird das Sensorsignal als Funktion einer gemessenen Zugkraft generiert, welche zum Ziehen eines mit dem landwirtschaftlichen Fahrzeugs verbundenen Arbeitsgerätes benötigt wird. Die im Wesentlichen vertikalen Fahrzeugschwingungen bewirken aufgrund der dadurch schwankenden, auf den Boden übertragbaren Kräfte ebenfalls eine dynamisch schwankende Veränderung in der Zugkraft. Ein Grenzwert kann hierbei ein nicht zu überschreitender Wert der Zugkraft und/oder einer Zugkraftschwankung sein, welcher beispielsweise in das Steuergerät eingegeben werden kann. Die Generierung des Sensorsignals als Funktion der gemessenen Zugkraft bietet den Vorteil, dass bereits vorhandene Sensoren, beispielsweise zur Kraftmessung an einem Dreipunktkraftheber, zur Ermittlung der Zugkraft genutzt werden können.

Vorzugsweise wird das Sensorsignal als Funktion einer gemessenen Radlast, Achslast und/oder eines Fahrzeuggewichtes generiert. Hierbei kann mittels entsprechender Sensoren die Last an den einzelnen Rädern oder den Achsen gemessen werden oder das Gesamtgewicht des landwirtschaftlichen Fahrzeuges bestimmt werden. Als Grenzwerte können hierbei entsprechende Lastwerte und/oder Gewichtswerte vorgegeben werden, deren Überschreitung einen auftretenden Power Hop anzeigen können. Die Nutzung der Radlasten, Achslasten und/oder des Fahrzeuggewichtes zur Generierung des Sensorsignals bietet den Vorteil, dass durch die entsprechenden Lastsensoren das Fahrzeuggewicht bestimmt werden und auch für die automatische Bestimmung der Reifentragfähigkeitsgrenze genutzt werden kann. Dies hat den Vorteil, dass eine Bestimmung des Fahrzeuggewichtes durch den Bediener und/oder eine Eingabe des Fahrzeuggewichtes durch den Bediener entfallen und die automatische Bestimmung des Reifenmindestdruckes verbessert werden kann.

Die Erfindung betrifft weiterhin ein System zur Reduzierung von Fahrzeugschwingungen für ein landwirtschaftliches Fahrzeug mit einem Antriebsmotor und einem damit zusammenwirkenden Fahrgetriebe zum Antrieb von Rädern mit luftgefüllten Reifen, und einer Steuereinheit zur Regelung eines Reifendruckes mindestens eines Reifens, wobei erfindungsgemäß ein Sensorsignal in Abhängigkeit mindestens einer ermittelten Fahrzeugschwingung generierbar ist, und der Reifendruck mindestens eines Reifens in Abhängigkeit des Sensorsignals, insbesondere automatisch, durch die Steuereinheit zur Reduzierung der ermittelten Fahrzeugschwingung regelbar ist. Dadurch können die vertikalen Fahrzeugschwingungen durch eine Änderung der Reifensteifigkeit beseitigt werden, so dass eine Reduzierung der Arbeitsleistung, beispielsweise durch eine Reduzierung der eingespritzten Kraftstoffmenge, vermieden werden kann. Hierdurch kann gewährleistet werden, dass das landwirtschaftliche Fahrzeug auch bei wechselnden Umweltbedingungen und einem weniger erfahrenen Bedienern mit hoher Arbeitsleistung und Effizienz betrieben werden kann.

Die Erfindung betrifft ferner ein landwirtschaftliches Fahrzeug mit einem wie vorstehend ausgebildeten System zur Reduzierung von Fahrzeugschwingungen.

Nachfolgend wird die Erfindung unter Bezugnahme auf die anliegenden Zeichnungen näher erläutert.

Es zeigen:
Fig. 1: eine schematische Seitenansicht eines landwirtschaftlichen Fahrzeuges; und
Fig. 2: ein schematisches Ablaufdiagramm zur Durchführung des Verfahrens zur Reduzierung der Fahrzeugschwingungen.

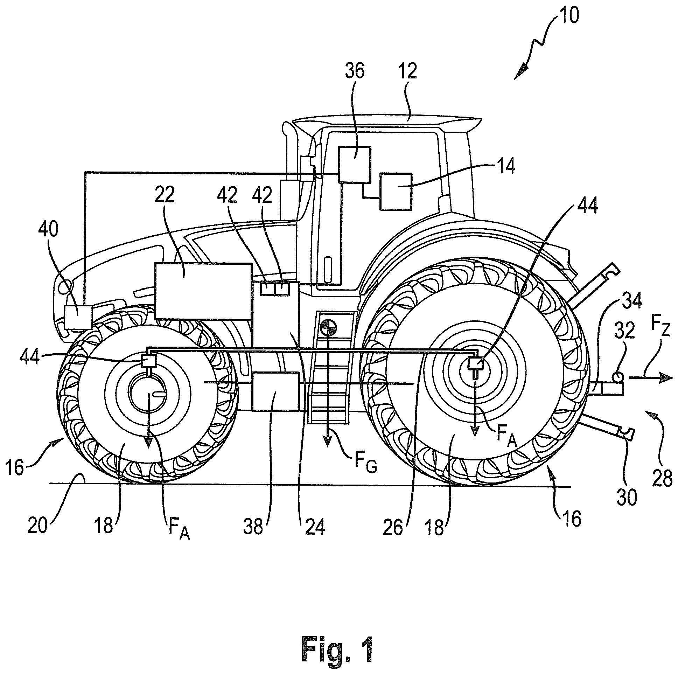

In Fig. 1 ist ein landwirtschaftliches Fahrzeug 10 in Form eines Traktors schematisch von der Seite dargestellt, wobei der grundsätzliche Aufbau eines Traktors als dem Fachmann bekannt angenommen wird. Ein landwirtschaftliches Fahrzeug 10 im Sinne der Erfindung kann jedes zur landwirtschaftlichen Arbeit einsetzbare Fahrzeug sein, beispielsweise ein Traktor, ein Teleskoplader, eine Baumaschine oder eine selbstfahrende Erntemaschine. Der Traktor weist zur Aufnahme eines Bedieners eine geschlossene Fahrerkabine 12 auf, wobei innerhalb der Fahrerkabine 12 ein Bedienterminal 14 zur Bedienung des landwirtschaftlichen Fahrzeuges 10 angeordnet ist. Das landwirtschaftliche Fahrzeug 10 weist mehrere, an einer Vorderachse und einer Hinterachse angeordnete Räder 16 auf. Die Räder 16 weisen dabei jeweils luftgefüllte Reifen 18 auf, welche mit einem Boden 20, insbesondere zur Übertragung von Antriebskräften, in Eingriff stehen. Die Räder 16 werden durch einen Antriebsmotor 22, welcher in Form eines Verbrennungsmotors ausgebildet ist, und einem mit diesem zusammenwirkenden Fahrgetriebe 24 angetrieben. Das Fahrgetriebe 24 kann dabei in Form eines hydraulisch-mechanisch leistungsverzweigten Getriebes ausgebildet sein, welches in dem hydraulischen Leistungszweig Hydrostaten 42 aufweist. Ein Abtriebsdrehmoment des Fahrgetriebes 24 wird über einen Antriebsstrang 26, welcher schematisch dargestellt ist, auf die Räder 16 übertragen, wobei das dargestellte landwirtschaftliche Fahrzeug 10 ein Allrad getriebenes Fahrzeug ist. Zum Ziehen eines landwirtschaftlichen Arbeitsgerätes (nicht dargestellt) weist das landwirtschaftliche Fahrzeug 10 unterschiedliche Anhängevorrichtungen 28 auf. Der dargestellte Traktor weist beispielsweise heckseitig sowohl einen Dreipunktkraftheber 30 als auch ein Zugpendel 32 auf. Ein beispielsweise an dem Zugpendel 32 angehängtes Arbeitsgerät bewirkt eine im Wesentlichen horizontal an dem Zugpendel 32 wirkende Zugkraft Fz. Die Zugkraft Fz kann dabei beispielsweise über einen Zugkraftsensor 34 gemessen werden. Bei der Bearbeitung des Bodens 20 kann es insbesondere bei einem trockenen Boden 20 und einem mittleren bis hohen Zugkraftbedarf Fz, zu einem Aufschwingen des landwirtschaftlichen Fahrzeuges 10 im Wesentlichen in vertikaler Richtung kommen. Diese im Wesentlichen vertikal ausgebildeten Fahrzeugschwingungen sind auch unter dem Begriff Power Hop bekannt. Diese vertikalen Fahrzeugschwingungen können nicht nur für den Bediener des landwirtschaftlichen Fahrzeuges 10 unangenehm werden, sondern führen auch zu einer Schwankung der auf den Boden übertragbaren Kräfte und damit zu einer dynamischen Schwankung der Achslast F_{A}, der Zugkraft Fz sowie des Abtriebsdrehmomentes in dem Fahrgetriebe 24, wodurch es auch zu Beschädigungen an dem landwirtschaftlichen Fahrzeug 10 und/oder dem angehängten Arbeitsgerät kommen kann.

Erfindungsgemäß wird in Abhängigkeit mindestens einer ermittelten Fahrzeugschwingung, insbesondere einer vertikalen Fahrzeugschwingung, ein Sensorsignal S generiert, und ein Reifendruck mindestens eines Reifens in Abhängigkeit des Sensorsignals S automatisch durch eine Steuereinheit 36, welche in der Fahrerkabine 12 angeordnet sein kann, zur Reduzierung der ermittelten Fahrzeugschwingung geregelt. Die ermittelte Fahrzeugschwingung kann dabei eine im Wesentlichen vertikale Fahrzeugschwingung sein und/oder eine im Wesentlichen horizontale Fahrzeugschwingung, beispielsweise verursacht durch eine dynamische Schwankung der Zugkraft Fz, welche in horizontaler Richtung wirkt. In Abhängigkeit der ermittelten Fahrzeugschwingung wird ein Sensorsignal S, beispielsweise durch die Steuereinheit 36, generiert, welches zur Regelung des Reifendruckes mindestens eines Reifens 18 genutzt wird. Zur Regelung des Reifendruckes eines oder mehrerer Reifen 18 weist das landwirtschaftliche Fahrzeug 10 eine Reifendruckregelanlage 38 auf, welche durch die Steuereinheit 36 regelbar ist. Die Steuereinheit 36 kann beispielsweise in die Reifendruckregelanlage integriert sein. Dadurch kann der Reifendruck eines oder mehrerer Reifen 18 innerhalb der zulässigen Betriebsparameter geregelt werden. Eine Regelung der Reifendrücke der Reifen 18 kann kontinuierlich in Abhängigkeit des Sensorsignals S erfolgen. Um einen andauernden Betrieb der Reifendruckregelanlage 38 zu vermeiden, kann ein Grenzwert S_{G} für das Sensorsignal S vorgegeben und in der Steuereinheit 36 hinterlegt werden. Eine Regelung des Reifendruckes der Reifen 18 erfolgt dann erst bei Überschreiten des Grenzwertes S_{G} durch das Sensorsignal S, wodurch Fahrzeugschwingungen bis zu einer dem Grenzwert S_{G} entsprechenden Größe toleriert werden, ohne eine Regelung der Reifendrücke auszulösen. Das Sensorsignal S kann durch eine manuelle Eingabe des Bedieners, beispielsweise in das Bedienterminal 14, generiert werden, wobei die Eingabe des Bedieners auch dem Erreichen des Grenzwertes S_{G} des Sensorsignales S entspricht. Weiterhin kann das Sensorsignal S als Funktion einer gemessenen Beschleunigung des landwirtschaftlichen Fahrzeuges 10 generiert werden. Hierbei kann ein Beschleunigungssensor 40 beispielsweise frontseitig an dem landwirtschaftlichen Fahrzeug 10 angeordnet sein, wodurch im Wesentlichen vertikale Fahrzeugschwingungen und/oder horizontale Fahrzeugschwingungen unmittelbar gemessen werden können. Bei Überschreiten entsprechend vorgegebener Beschleunigungswerte, deren zugehörige Sensorsignale S dem Grenzwert S_{G} entsprechen, kann eine Regelung des Reifendruckes der Reifen 18 erfolgen. Das Sensorsignal S kann ebenfalls als Funktion eines gemessenen Abtriebsdrehmomentes des Fahrgetriebes 24 generiert werden. Hierbei können an den Hydrostaten 42 des hydraulisch-mechanisch leistungsverzweigten Fahrgetriebes 24 die Drücke gemessen werden, und bei Überschreiten von vorgegebenen Grenzwerten, die dem Grenzwert S_{G} entsprechen, kann eine Regelung des Reifendruckes der Reifen 18 erfolgen. Ebenso kann ein Sensorsignal S als Funktion der gemessenen Zugkraft Fz durch den Zugkraftsensor 34 erfolgen. Der Grenzwert S_{G} kann hierbei ein vorgegebener Grenzwert S_{G} der beispielsweise zulässigen Zugkraft Fz sein. Ebenso kann das Sensorsignal S als Funktion einer gemessenen Radlast, Achslast F_{A} oder eines Fahrzeuggewichtes F_{G} generiert werden. Zur Ermittlung des Fahrzeuggewichtes F_{G} und/oder der Achslasten F_{A} kann an jedem Rad 16 ein Lastsensor 44 zur Bestimmung der Radlast und/oder Achslast F_{A} vorgesehen sein. Aus den ermittelten Werten der Lastsensoren 44 kann auch das Fahrzeuggewicht F_{G} ermittelt werden. Der zulässige Mindestreifendruck bei einer gegebenen Achslast F_{A} des landwirtschaftlichen Fahrzeuges 10 entspricht der sogenannten Reifentragfähigkeitsgrenze, welche aus einer in der Steuereinheit 36 hinterlegbaren Reifentragfähigkeitstabelle und der mittels der Lastsensoren 44 ermittelten Achslast F_{A} und/oder dem Fahrzeuggewicht F_{G} bestimmt werden kann.

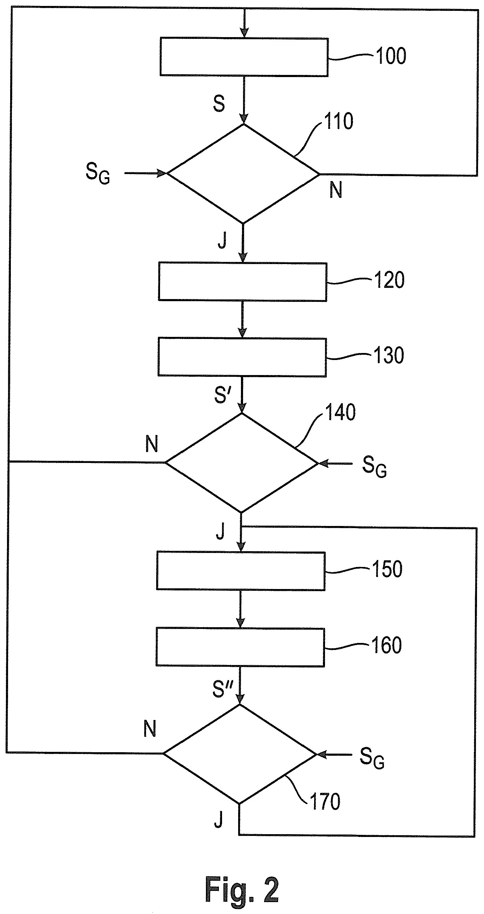

In Fig. 2 ist ein Ablaufdiagramm des Verfahrens zur Reduzierung der Fahrzeugschwingung des landwirtschaftlichen Fahrzeuges 10 dargestellt. In einem ersten Schritt 100 werden die auftretenden Fahrzeugschwingungen ermittelt, beispielsweise mittels des Beschleunigungssensors 40 und/oder des Zugkraftsensors 34, und in Abhängigkeit von den ermittelten Fahrzeugschwingungen wird ein zugehöriges Sensorsignal S generiert. Die Steuereinheit 36 vergleicht in einem ersten Entscheidungsschritt 110 das generierte Sensorsignal S mit einem in der Steuereinheit 36 hinterlegten Grenzwert S_{G}. Solange der Grenzwert S_{G} durch das Sensorsignal S nicht erreicht wird, wird die Ermittlung der Fahrzeugschwingungen sowie die Generierung der Sensorsignale S in dem Schritt 100 fortgesetzt. Bei Erreichen des Grenzwertes S_{G} durch das Sensorsignal S, was dem Auftreten der sogenannten Power Hop Fahrzeugschwingungen entsprechen kann, wird durch die Steuereinheit 36 in einem zweiten Schritt des Verfahrens 120 der Reifendruck mindestens eines Reifens 18 auf den Mindestreifendruck, welcher der Tragfähigkeitsgrenze des Reifens 18 bei gegebener Achslast F_{A} entspricht, abgesenkt, woraufhin in einem dritten Schritt 130 erneut die Fahrzeugschwingungen gemessen und ein zugehöriges Sensorsignal S' generiert wird. In einem zweiten Entscheidungsschritt 140 erfolgt dann ein erneuter Abgleich des zugehörigen Sensorsignals S' mit dem vorgegebenen Grenzwert S_{G}. Wird der Grenzwert S_{G} immer noch überschritten, erfolgt in dem darauffolgenden vierten Schritt 150 eine Erhöhung mindestens eines Reifendruckes um einen diskreten Wert. In einem fünften Schritt 160 werden erneut die Schwingungen gemessen und ein zugehöriges Sensorsignal S" generiert. Die Erhöhung des Reifendruckes des Reifens 18 erfolgt dabei so lange in diskreten Schritten, bis das zugehörige Sensorsignal S" den Grenzwert S_{G} unterschreitet, was in dem dritten Entscheidungsschritt 170 überwacht wird.

### Bezugszeichenliste

- 10: landwirtschaftliches Fahrzeug
- 12: Fahrerkabine
- 14: Bedienterminal
- 16: Rad
- 18: Reifen
- 20: Boden
- 22: Antriebsmotor
- 24: Fahrgetriebe
- 26: Antriebsstrang
- 28: Anhängevorrichtung
- 30: Dreipunktkraftheber
- 32: Zugpendel
- 34: Zugkraftsensor
- 36: Steuereinheit
- 38: Reifendruckregelanlage
- 40: Beschleunigungssensor
- 42: Hydrostat
- 44: Lastsensor

- S, S', S": Sensorsignal
- S_{G}: Grenzwert
- F_{Z}: Zugkraft
- F_{A}: Achslast
- F_{G}: Fahrzeuggewicht

- 100: erster Schritt
- 110: erster Entscheidungsschritt
- 120: zweiter Schritt
- 130: dritter Schritt
- 140: zweiter Entscheidungsschritt
- 150: vierter Schritt
- 160: fünfter Schritt
- 170: dritter Entscheidungsschritt

## Patentansprüche

1. Verfahren zur Reduzierung von Fahrzeugschwingungen für ein landwirtschaftliches Fahrzeug (10) mit einem Antriebsmotor (22) und einem damit zusammenwirkenden Fahrgetriebe (24) zum Antrieb von Rädern (16) mit luftgefüllten Reifen (18), und einer Steuereinheit (36) zur Regelung eines Reifendruckes mindestens eines Reifens (18), **dadurch gekennzeichnet, dass** ein Sensorsignal (S, S', S") in Abhängigkeit mindestens einer ermittelten Fahrzeugschwingung generiert wird, und der Reifendruck mindestens eines Reifens (18) in Abhängigkeit des Sensorsignals (S, S', S") durch die Steuereinheit (36) zur Reduzierung der ermittelten Fahrzeugschwingung geregelt wird, erfolgt ein Absenken des Reifendruckes mindestens eines Reifens (18) auf einen Mindestreifendruck, wobei der Mindestreifendruck von einer Reifentragfähigkeitsgrenze des Reifens (18) abhängig ist, und ein Anheben, insbesondere schrittweises Anheben, des Reifendruckes bei fortgesetztem Überschreiten des Grenzwertes (SG) durch das Sensorsignal (S, S', S") bis zu einem Unterschreiten des Grenzwertes (SG) durch das Sensorsignal (S, S', S").

2. Verfahren nach Anspruch 1, **dadurch gekennzeichnet, dass** für das Sensorsignal (S, S', S") ein, insbesondere in der Steuereinheit (36) hinterlegbarer, Grenzwert (S_{G}) vorgegeben wird, und bei einem Überschreiten des Grenzwertes (S_{G}) der Reifendruck mindestens eines Reifens (18) geregelt wird.

3. Verfahren nach Anspruch 1 oder 2, **dadurch gekennzeichnet, dass** eine Reifentragfähigkeitsgrenze und/oder ein entsprechender Mindestreifendruck in der Steuereinheit (36) hinterlegt wird.

4. Verfahren nach einem der vorherigen Ansprüche, **dadurch gekennzeichnet, dass** das Sensorsignal (S, S', S") durch eine manuelle Eingabe eines Bedieners generiert wird.

5. Verfahren nach einem der vorherigen Ansprüche, **dadurch gekennzeichnet, dass** das Sensorsignal (S, S', S") als Funktion einer gemessenen vertikalen Beschleunigung des landwirtschaftlichen Fahrzeuges (10) generiert wird.

6. Verfahren nach einem der vorherigen Ansprüche, **dadurch gekennzeichnet, dass** das Sensorsignal (S, S', S") als Funktion eines gemessenen Abtriebsdrehmomentes des Fahrgetriebes (24) generiert wird.

7. Verfahren nach einem der vorherigen Ansprüche, **dadurch gekennzeichnet, dass** das Sensorsignal (S, S', S") als Funktion einer gemessenen Rad-, Achs- und/oder Gesamtzugkraft (Fz) generiert wird, welche zum Ziehen eines mit dem landwirtschaftlichen Fahrzeug (10) verbundenen Arbeitsgerätes benötigt wird

8. Verfahren nach einem der vorherigen Ansprüche, **dadurch gekennzeichnet, dass** das Sensorsignal (S, S', S") als Funktion einer gemessenen Radlast, Achslast (F_{A}) und/oder eines Fahrzeuggewichtes (F_{G}) generiert wird.

9. System zur Reduzierung von Fahrzeugschwingungen für ein landwirtschaftliches Fahrzeug (10) mit einem Antriebsmotor (22) und einem damit zusammenwirkenden Fahrgetriebe (24) zum Antrieb von Rädern (16) mit luftgefüllten Reifen (18), und einer Steuereinheit (36) zur Regelung eines Reifendruckes mindestens eines Reifens (18), **dadurch gekennzeichnet, dass** ein Sensorsignal (S, S', S") in Abhängigkeit mindestens einer ermittelten Fahrzeugschwingung generierbar ist, und die Steuereinheit (36) derart konfiguriert ist, dass der Reifendruck mindestens eines Reifens (18) in Abhängigkeit des Sensorsignals (S, S', S") durch die Steuereinheit (36) zur Reduzierung der ermittelten Fahrzeugschwingung geregelt wird, der Reifendruck mindestens eines Reifens (18) auf einen Mindestreifendruck abgesenkt wird, wobei der Mindestreifendruck von einer Reifentragfähigkeitsgrenze des Reifens (18) abhängig ist, und der Reifendruck bei fortgesetztem Überschreiten des Grenzwertes (SG) durch das Sensorsignal (S, S', S") bis zu einem Unterschreiten des Grenzwertes (SG) durch das Sensorsignal (S, S', S"), insbesondere schrittweise, angehoben wird.

10. Landwirtschaftliches Fahrzeug mit einem System zur Reduzierung von Fahrzeugschwingungen nach Anspruch 9.

## Claims

1. A method of reducing vehicle oscillations for an agricultural vehicle (10) comprising a drive engine (2) and a drive transmission (24) cooperating therewith for driving wheels (16) with pneumatic tyres (18), and a control unit (26) for regulating a tyre pressure of at least one tyre (18), **characterised in that** a sensor signal (S, S', S") is generated in dependence on at least one ascertained vehicle oscillation and the tyre pressure of at least one tyre (18) is regulated in dependence on the sensor signal (S, S', S") by the control unit (36) to reduce the ascertained vehicle oscillation, a reduction in the tyre pressure of at least one tyre (18) is effected to a minimum tyre pressure, wherein the minimum tyre pressure is dependent on a tyre carrying capability limit of the tyre (18), and an increase, in particular a stepwise increase, in the tyre pressure when the limit value (SG) continues to be exceeded by the sensor signal (S, S', S") until the sensor signal (S, S', S") falls below the limit value (SG).

2. A method according to claim 1 **characterised in that** a limit value (S_{G}) which can be stored in particular in the control unit (36) is predetermined for the sensor signal (S, S', S") and the tyre pressure of at least one tyre (18) is regulated when the limit value (S_{G}) is exceeded.

3. A method according to claim 1 or claim 2 **characterised in that** a tyre carrying capability limit and/or a corresponding minimum tyre pressure is stored in the control unit (36).

4. A method according to one of the preceding claims **characterised in that** the sensor signal (S, S', S") is generated by a manual input by an operator.

5. A method according to one of the preceding claims **characterised in that** the sensor signal (S, S', S") is generated as a function of a measured vertical acceleration of the agricultural vehicle (10).

6. A method according to one of the preceding claims **characterised in that** the sensor signal (S, S', S") is generated as a function of a measured drive output torque of the drive transmission (24).

7. A method according to one of the preceding claims **characterised in that** the sensor signal (S, S', S") is generated as a function of a measured wheel load, axle load (F_{A}) and/or a vehicle weight (F_{Z}) which is required for towing a working implement connected to the agricultural vehicle (10).

8. A method according to one of the preceding claims **characterised in that** the sensor signal (S, S', S") is generated as a function of a measured wheel load, axle load (F_{A}) and/or a vehicle weight (F_{G}).

9. A system for reducing vehicle oscillations for an agricultural vehicle (10) comprising a drive engine (2) and a drive transmission (24) cooperating therewith for driving wheels (16) with pneumatic tyres (18), and a control unit (26) for regulating a tyre pressure of at least one tyre (18), **characterised in that** a sensor signal (S, S', S") can be generated in dependence on at least one ascertained vehicle oscillation and the control unit (36) is configured in such a way that the tyre pressure of at least one tyre (18) is regulated in dependence on the sensor signal (S, S', S") by the control unit (36) for reducing the ascertained vehicle oscillation, the tyre pressure of at least one tyre (18) is reduced to a minimum tyre pressure, wherein the minimum tyre pressure is dependent on a tyre carrying capability limit of the tyre (18) and the tyre pressure is increased in particular step-wise when the limit value (SG) continues to be exceeded by the sensor signal (S, S', S") until the sensor signal (S, S', S") falls below the limit value (SG).

10. An agricultural vehicle comprising a system for reducing vehicle oscillations according to claim 9.

## Revendications

1. Procédé de réduction de vibrations de véhicule pour un véhicule agricole (10) comprenant un moteur d'entraînement (22) et une boîte de vitesses (24) coopérant avec celui-ci pour entraîner des roues (16) munies de pneumatiques (18) emplis d'air, et comprenant une unité de commande (36) pour réguler une pression de pneumatique d'au moins un pneumatique (18), **caractérisé en ce qu'**un signal de capteur (S, S', S") est généré en fonction d'au moins une vibration de véhicule déterminée, et la pression de pneumatique d'au moins un pneumatique (18) est régulée par l'unité de commande (36) en fonction du signal de capteur (S, S', S") pour réduire la vibration de véhicule déterminée, **en ce que** se produisent une baisse de la pression de pneumatique d'au moins un pneumatique (18) jusqu'à une pression de pneumatique minimale, la pression de pneumatique minimale étant fonction d'une limite de capacité de charge de pneumatique du pneumatique (18), et une augmentation, en particulier une augmentation progressive, de la pression de pneumatique en cas de surpassement continu de la valeur limite (SG) par le signal de capteur (S, S', S") jusqu'à un soupassement de la valeur limite (SG) par le signal de capteur (S, S', S").

2. Procédé selon la revendication 1, **caractérisé en ce que** pour le signal de capteur (S, S', S") est prédéfinie une valeur limite (S_{G}), en particulier enregistrable dans l'unité de commande (36), et, en cas de surpassement de la valeur limite (S_{G}), la pression de pneumatique d'au moins un pneumatique (18) est régulée.

3. Procédé selon la revendication 1 ou 2, **caractérisé en ce qu'**une limite de capacité de charge de pneumatique et/ou une pression de pneumatique minimale correspondante sont enregistrées dans l'unité de commande (36).

4. Procédé selon une des revendications précédentes, **caractérisé en ce que** le signal de capteur (S, S', S") est généré par une entrée manuelle d'un utilisateur.

5. Procédé selon une des revendications précédentes, **caractérisé en ce que** le signal de capteur (S, S', S") est généré en fonction d'une accélération verticale mesurée du véhicule agricole (10).

6. Procédé selon une des revendications précédentes, **caractérisé en ce que** le signal de capteur (S, S', S") est généré en fonction du couple de sortie mesuré de la boîte de vitesses (24).

7. Procédé selon une des revendications précédentes, **caractérisé en ce que** le signal de capteur (S, S', S") est généré en fonction d'une force mesurée de roue, d'essieu et/ou de traction globale (F_{Z}) qui est nécessaire pour tracter un outil de travail relié au véhicule agricole (10).

8. Procédé selon une des revendications précédentes, **caractérisé en ce que** le signal de capteur (S, S', S") est généré en fonction d'une charge de roue, d'une charge d'essieu (F_{A}) et/ou d'un poids de véhicule (F_{G}) .

9. Système de réduction de vibrations de véhicule pour un véhicule agricole (10) comprenant un moteur d'entraînement (22) et une boîte de vitesses (24) coopérant avec celui-ci pour entraîner des roues (16) munies de pneumatiques (18) emplis d'air, et comprenant une unité de commande (36) pour réguler une pression de pneumatique d'au moins un pneumatique (18), **caractérisé en ce qu'**un signal de capteur (S, S', S") peut être généré en fonction d'au moins une vibration de véhicule déterminée, et l'unité de commande (36) est configurée de façon que la pression de pneumatique d'au moins un pneumatique (18) soit régulée par l'unité de commande (36) en fonction du signal de capteur (S, S', S") pour réduire la vibration de véhicule déterminée, **en ce que** la pression de pneumatique d'au moins un pneumatique (18) est abaissée à une pression de pneumatique minimale, la pression de pneumatique minimale étant fonction d'une limite de capacité de charge de pneumatique du pneumatique (18), et la pression de pneumatique étant augmentée, en particulier progressivement, en cas de surpassement continu de la valeur limite (SG) par le signal de capteur (S, S', S") jusqu'à un soupassement de la valeur limite (SG) par le signal de capteur (S, S', S").

10. Véhicule agricole comprenant un système pour réduire des vibrations de véhicule selon la revendication 9.
